# EUROPÄISCHE PATENTSCHRIFT

(11) **EP 0 635 177 B1**
(45) Veröffentlichungstag und Bekanntmachung des Hinweises auf die Patenterteilung: **21.08.1996**
(21) Anmeldenummer: 93906583.5
(22) Anmeldetag: 22.03.1993
(51) Int. Cl.: H04B 1/66

(54) **VERFAHREN ZUM ÜBERTRAGEN UND/ODER SPEICHERN DIGITALISIERTER, DATENREDUZIERTER AUDIOSIGNALE**
METHOD OF TRANSMITTING AND/OR STORING DIGITIZED DATA-REDUCED AUDIO SIGNALS
PROCEDE DE TRANSMISSION OU DE STOCKAGE DE SIGNAUX AUDIO NUMERISESA DONNEES REDUITES

(30) Priorität: 09.04.1992 DE 4211945
(43) Veröffentlichungstag der Anmeldung: 25.01.1995
(73) Patentinhaber: Institut für Rundfunktechnik GmbH, D-80939 München (DE)
(72) Erfinder: PLENGE, Georg, D-8191 Thanning (DE); WIESE, Detlef, D-8055 Goldach (DE); LINK, Martin, D-8000 München 45 (DE)
(74) Vertreter: Konle, Tilmar
(86) Internationale Anmeldenummer: EP9300690
(87) Internationale Veröffentlichungsnummer: WO9321694

(56) Entgegenhaltungen:
- EP-A- 0 193 143
- EP-A- 0 376 553
- US-A- 4 546 342
- US-A- 4 821 260
- US-A- 4 882 754
- US-A- 4 942 607
- US-A- 5 179 623

## Beschreibung

Die Erfindung bezieht sich auf ein Verfahren gemäß dem Oberbegriff des Patentanspruchs 1. Ein derartiges Verfahren ist beispielsweise aus der US-4 882 754 bekannt.

Bei der bitratenreduzierenden Codierung von Tonsignalen, die in bereits digitalisierter Form, z.B. 48 kHz Abtastfrequenz/16-bit-Auflösung, vorliegen, ist es aus der EP 290 581 bekannt, psychoakustische Phänomene der Wahrnehmung von Tonsignalen derart zu nutzen, daß die ursprüngliche Bitrate erheblich reduziert wird. Solche Verfahren, die eine Transcodierung von einer höheren zu einer niedrigeren Bitrate durchführen, sind unter dem Namen Quellcodierung geläufig. Sie nutzen insbesondere Verdeckungseffekte des Gehörs im Frequenz- und Zeitbereich aus. Ziel dieser Verfahren ist es, die hörbare Qualität, die das Tonsignal vor der Transcodierung (Quellcodierung) aufweist, durch Reduktion der Bitrate möglichst nicht zu ändern (optimale Transcodierung).

In vielen Anwendungsfällen steht für die Übertragung bzw. Speicherung eine begrenzte Datenkapazität zur Verfügung. Ist diese bereitgestellte Bitrate unzureichend, so führt eine weitere Datenreduktion nach den Prinzipien der optimalen Transcodierung zu teilweise erheblichen Störungen, insbesondere in Form von erheblichen Klangverfälschungen. Dieselben Störungen ergeben sich natürlich auch, wenn die Quellcodierung nicht zweistufig, sondern in einem Schritt erfolgt.

Es ist ferner bei einem Verfahren zum Übertragen und/oder Speichern digitalisierter, datenreduzierter Audiosignale bekannt (EP-A-0290581), beim Überschreiten einer vorgegebenen Bitzahl nach der Codierung (Codeüberlastung) weitere Codierschritte folgen zu lassen, bis die tatsächliche Bitzahl die vorgesehene Bitzahl nicht mehr überschreitet. Ein sicheres Vermeiden einer Codeüberlastung ist damit jedoch nicht ereichbar.

Aus der US-4 882 754 ist es bekannt, zur Anpassung eines digitalisierten Audiosignals an die Kapaizit eines Übertragungskanals einen Zwischenspeicher vorzusehen. Um ein Überlaufen des Zwischenspeichers zu vermeiden, werden in Abhängigkeit von dem Füllzustand des Zwischenspeichers die niedrigstwertigen Bit des digitalisierten Audiosignals eliminiert. Diese Datenreduktion stellt indessen keine Quellencodierung dar, bei welcher psychoakustische Wahrnehmungsphänomene berücksichtigt werden und eine Qualitätsverringerung durch die Datenreduktion vermieden wird. Vielmehr wird durch die Eliminierung der niedrigstwertigen Bits des digitalisierten Audisignals ein hörbares Quantisierungsrauschen in Kauf genommen.

Die Aufgabe der Erfindung besteht demgegenüber darin, bei der weiteren Datenreduktion eines bereits datenreduzierten Audiosignals oder bei einer erstmaligen Datenreduktion eines Audiosignals unter Inkaufnahme von Codeverletzungen die Störwirkung zu minimieren.

Diese Aufgabe wird durch die kennzeichnenden Merkmale des Anspruches 1 gelöst.

Vorteilhafte Weiterbildungen der erfindungsgemäßen Lösungen ergeben sich aus den Unteransprüchen.

Die Erfindung wird anhand eines Ausführungsbeispiels in der einzigen Zeichnung näher erläutert. Es zeigt:

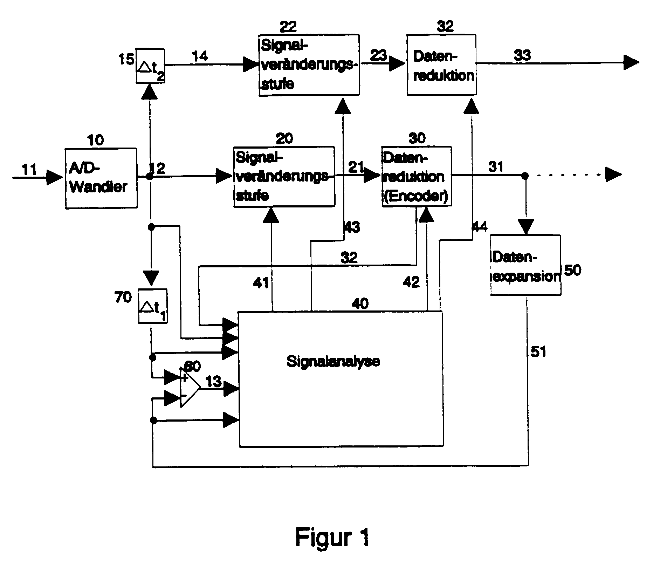

- Figur 1: ein Blockschaltbild eines Encoders zur Durchführung des erfindungsgemäßen Verfahrens.

Bei dem in Fig. 1 dargestellten Encoder wird das ankommende, analoge Audiosignal 11 einer Analog/Digital-Wandlungsstufe 10 zugeführt. Das digitalisierte Audiosignal 12 wird einer noch zu erläuternden Stufe 40 zur Signalanalyse, einer Signalveränderungsstufe 20, sowie Verzögerungsgliedern 15 und 70 zugeführt. Das digitalisierte Audiosignal wird in der Signalveränderungsstufe 20 in Abhängigkeit einer von der Signalanalysestufe 40 generierten Änderungsempfehlung 41 geändert. Die Änderungsempfehlung 41 kann auch darin bestehen, nichts zu ändern. Das gegebenenfalls geänderte Audiosignal 21 am Ausgang der Stufe 20 wird in einer folgenden Datenreduktionsstufe 30 hinsichtlich der für die Übertragung bzw. Speicherung zur Verfügung stehenden Datenrate reduziert. Diese Datenreduktion wird in Abhängigkeit einer Codierempfehlung 42 durchgeführt, die von der Signalanalysestufe 40 bereitgestellt wird. Das encodierte Tonsignal 31 am Ausgang der Stufe 30 wird für den noch genauer zu beschreibenden rekursiven Steuerprozeß einer Datenexpansionsstufe 50 zugeführt, in der das datenreduzierte Audiosignal wieder expandiert wird, so daß am Ausgang dieser Stufe 50 ein digitalisiertes Audiosignal 51 z.B. in einer linear codierten 16-bit Pulscodemodulation zur Verfügung steht. Dieses wieder expandierte digitale Audiosignal 51 wird der Signalanalysestufe 40 zugeführt. Zusätzlich liegen am Eingang der Stufe 40 das zu codierende digitalisierte Audiosignal 12, ferner ein von der Datenreduktionsstufe 30 geliefertes Informationssignal 32 über die für die Codierung des Audiosignals 12 notwendige Datenrate, welche Aufschluß gibt über die vorliegenden Codeverletzungen bei der Datenreduktion des Audiosignals 12. Der Stufe 40 wird ferner ein Differenzsignal 13 zugeführt, welches aus der Differenzbildung zwischen dem wieder expandierten Audiosignal 51 und dem zu codierenden Audiosignal 12 in der Stufe 60 resultiert. Damit sich die Diferenzbildung auf zeitlich synchrone Audiosignale bezieht, wird das zu codierende Audiosignal 12 in der Verzögerungsstufe 70 um den Betrag Δt₁ verzögert und ebenfalls der Stufe 40 zugeführt. Aufgrund des Informationssignals 32 stellt die Signalanalysestufe 40 fest, ob eine Codeüberlastung vorliegt. Unter einer Codeüberlastung ist ein Zustand zu verstehen, bei dem die zur Verfügung stehende Kapazität eines Übertragungs- oder Speichermediums nicht für die optimale Transcodierung des Audiosignals ausreicht. Liegt eine solche Codeüberlastung vor, so werden die an der Signalanalysestufe 40 anliegenden Eingangssignale 12, 13 und 51 hinsichtlich möglicher Signalveränderungen sowie Codierstrategien untersucht. Mögliche Signalveränderungen, die in Form einer Änderungsempfehlung 41 der Signalveränderungsstufe 20 mitgeteilt werden, können z.B. eine Bandbreitenbegrenzung oder Pegelveränderung des zu codierenden Audiosignals sein, die zu einer Verringerung der in der Datenreduktionsstufe 30 benötigten Datenrate und gleichzeitig zu einer minimalen Störwirkung des wieder expandierten Audiosignals 51 führen. Andere typische Änderungsmaßnahmen sind neben der erwähnten Bandbreitenbegrenzung und Pegelveränderung auch Frequenzgangsänderung (Preemphase), zeitliche Änderungen, wie steilere oder geringere Signalamplitudenänderungen, Signalwiederholungen an Stelle des eigentlichen Signals, insbesondere bei periodischen oder quasi-periodischen Signalverläufen des Audiosignals, Vereinfachung der räumlichen Abbildung von mehrkanligen Audiosignalen, wie z.B. Monobildung für den gesamten Audiofrequenzbereich oder eines Teils desselben. Die Signalanalysestufe 40 erzeugt ferner eine Codierempfehlung 42, die der Datenreduktionsstufe 30 mitgeteilt wird. Die Codierempfehlung 42 wird in der Signalanalysestufe 40 unter Verwendung der dort generierten Änderungsempfehlung 41 aus einer aus einer Tabelle von Störwirkungsmustern ausgewählt. Die Codierempfehlung 42 wird in der Datenreduktionsstufe 30 für eine Transcodierung des zu codierenden Audiosignals bei verringerter Bitrate verwendet, um dadurch eine möglichst geringe Störwirkung hervorzurufen. Der für die Signalanalyse in der Stufe 40 benötigte rekursive Steuerprozeß kann auch mehrmals durchgeführt werden, gegebenenfalls solange, bis durch die Änderungs- und Codierempfehlungen 41, 42 ein befriedigendes Ergebnis erreicht ist. Für die endgültige Signalveränderung sowie Datenreduktion werden die endgültigen Änderungs- und Codierempfehlungen 43 bzw. 44 einer weiteren Signalveränderungsstufe 22 bzw. einer weiteren Datenreduktionsstufe 32 zugeführt, welche in gleicher Weise wie die Stufen 20 und 30 arbeiten. Da für den rekursiven Steuerprozeß eine bestimmte Zeitdauer benötigt wird, muß das Audiosignal 12 vor der endgültigen suboptimalen Transcodierung mittels der Stufe 15 um den Betrag Δt₂ zeitverzögert werden. Das aus der

Datenreduktionsstufe 32 resultierende, datenreduzierte Audiosignal 33 kann z.B. an einen nicht dargestellten Kanal-Encoder zur Abspeicherung auf einen Tonträger oder zur Aufbereitung eines Hörfunksignals übertragen werden.

Das erfindungsgemäße Verfahren kann auch ohne rekursiven Steuerprozeß arbeiten, wenn auf eine interne Überprüfung des durch die Änderungs- und Codierempfehlungen 41 bzw. 42 datenreduzierte und wieder expandierte Audiosignal 51 verzichtet wird. Der damit verbundene Vorteil einer Verringerung des baulichen Aufwandes (Komplexität) geht allerdings zu Lasten des erzielbaren Optimums der suboptimalen Transcodierung. Bei Verzicht auf den rekursiven Steuerprozeß entfallen an der Signalanalysestufe 40 die Eingangssignale 13 und 51 sowie das zeitverzögerte Audiosignal 12. Das bereits encodierte Signal 31 stellt das endgültig codierte Audiosignal dar, so daß ferner die Stufen 15, 22 und 32 nicht benötigt werden. Eine weitere Vereinfachung des erfindungsgemäßen Verfahrens wird durch zusätzlichen Verzicht auf die fortlaufend durchgeführte Signalanalyse erreicht, indem z.B. die Signalveränderungsstufe 20 auf eine konstante Veränderung und die Datenreduktionsstufe 30 auf eine konstante Codierempfehlung eingestellt werden.

Es versteht sich, daß die in der Signalveränderungsstufe 20 gegebenenfalls vorzunehmenden Signaländerungen auch vor der Analog/Digitalwandlung des analogen Audiosignals 11 durchgeführt werden können. Hierzu wird die Stufe 20 dem A/D-Wandler 10 vorgeschaltet.

## Patentansprüche

1. Verfahren zum Übertragen und/oder Speichern digitalisierter, quellencodierter Audiosignale, die bei der Quellencodierung einer Datenreduktion unterzogen werden, dahingehend, daß die Bitrate des quellencodierten Audiosignals an die Kapazität des Übertragungskanals bzw. Speichermediums angepaßt wird, **dadurch gekennzeichnet,** daß im Falle einer zu erwartenden Überschreitung einer vorgegebenen Bitzahl bei dem quellencodierten Audiosignal das digitalisierte Audiosignal vor seiner Quellencodierung in seinem Zeitverlauf und/oder in seiner spektralen Verteilung analysiert und gemäß einem ausgewählten Anpassungsmuster verändert wird, dahingehend, daß unter Inkaufnahme von Quellencodeverletzungen die dadurch hervorgerufene Störwirkung minimiert wird.

2. Verfahren nach Anspruch 1, **dadurch gekennzeichnet,** daß bei einer stereofonen Codierung, bei der zwei oder mehrere Audiosignale gemeinsam oder in Abhängigkeit voneinander codiert werden, die gezielte Veränderung der Signale vor der Codierung hinsichtlich der gegenseitigen Pegelverhältnisse der Audiosignale erfolgt.

3. Verfahren nach Anspruch 1 oder 2, **dadurch gekennzeichnet,** daß insbesondere bei sehr niedrigen Bitraten des datenreduzierten Audiosignals die gezielte Veränderung des digitalen Signals vor der Codierung dahin erfolgt, daß die Sprachverständlichkeit des bzw. der Audiosignale erhalten oder gegebenenfalls verbessert wird.

4. Verfahren nach Anspruch 1, **dadurch gekennzeichnet,** daß bei der Codierung des digitalen Signals eine Zuweisung von Codebits nach Maßgabe der vorherigen, gezielten Veränderung des digitalen Signals erfolgt.

5. Verfahren nach einem der Ansprüche 1 bis 4, **dadurch gekennzeichnet,** daß die Wahl des Codes oder die gezielte Veränderung des Audiosignals vor der Codierung nach kurzen Zeitabschnitten jeweils neu festgelegt wird.

## Claims

1. Method of transmitting and/or storing digitalized, source-encoded audio signals, which during the source-encoding, are subjected to a data-reduction, to the effect that the bit rate of the source-encoded audio signal is matched to the capacity of the transmission channel or storage medium, **characterized in that** if exceeding of a given bit number is to be expected in the case of the source-encoded audio signal, the digitalized audio signal is analyzed prior to its source-encoding in its course of time and/or in its spectral distribution and is changed according to a selected matching pattern, to the effect that, with acceptance of source code damage, the interference caused thereby is minimized.

2. Method according to Claim 1, **characterized in that** with a stereophonic coding, with which two or more audio signals are coded together or interdependently, the specific change of the signals takes place prior to the coding as regards the mutual level ratios of the audio signals.

3. Method according to Claim 1 or 2, **characterized in that** particularly with very low bit rates of the data-reduced audio signal, the specific change of the digital signal is carried out prior to the coding to the effect that the intelligibility of the audio signal or signals is maintained or possibly improved.

4. Method according to Claim 1, **characterized in that** during coding of the digital signal, an allocation of code bits takes place according to the previous, specific change of the digital signal.

5. Method according to one of Claims 1 to 4, **characterized in that** the selection of the code or the specific variation of the audio signal is in each case again determined after brief intervals of time prior to the coding.

## Revendications

1. Procédé de transmission et/ou de mémorisation de signaux audio numérisés à sources codées qui sont soumis lors du codage de source à une réduction de données, la fréquence de bits du signal audio à source codée étant adaptée à la capacité du canal de transmission ou du milieu de mémorisation, caractérisé en ce que le signal audio numérisé est analysé avant son codage de source quant à sa variation dans le temps et/ou quant à sa répartition spectrale dans le cas où un dépassement d'une fréquence de bits prédéterminée est prévisible dans le signal audio à source codée, et ce signal est alors modifié au moyen d'un échantillon d'adaptation choisi, l'effet de perturbation provoqué par d'éventuels dommages aux codes de source étant minimisé en tenant compte de tels dommages.

2. Procédé selon la revendication 1, caractérisé en ce que la modification visée des signaux de codage est réalisée, en ce qui concerne le rapport relatif des niveaux des signaux audio, avant le codage dans le cas d'un codage stéréophonique dans lequel deux ou plusieurs signaux audio sont codés en commun ou en fonction l'un de l'autre.

3. Procédé selon la revendication 1 ou 2, caractérisé en ce que la modification visée des signaux numériques dans le codage est réalisée, en particulier pour des fréquences de bits très basses du signal audio à données réduites, avant le codage de manière à maintenir ou éventuellement à améliorer la compréhension du langage du signal ou des signaux obtenus.

4. Procédé selon la revendication 1, caractérisé en ce qu'une assignation de code de bits est réalisée, lors du codage du signal numérique, en fonction de la modification précédente, visée, du signal numérique;

5. Procédé selon l'une des revendications 1 à 4, caractérisé en ce que la sélection du code ou la modification visée du signal audio sont respectivement redéfinis, avant le codage, après de courts laps de temps.
